# EUROPEAN PATENT SPECIFICATION

(11) **EP 3 261 450 B1**
(45) Date of publication and mention of the grant of the patent: **11.04.2018**
(21) Application number: 16712513.7
(22) Date of filing: 26.02.2016
(51) Int. Cl.: A23B 9/02, A23L 7/196

(54) **METHOD FOR THE ACCELERATED AGING OF RICE**
VERFAHREN ZUR BESCHLEUNIGTEN ALTERUNG VON REIS
PROCÉDÉ POUR LE VIEILLISSEMENT ACCÉLÉRÉ DU RIZ

(30) Priority: 26.02.2015 IT VR20150031
(43) Date of publication of application: 03.01.2018
(73) Proprietor: Grains-R&S S.R.L., 13100 Vercelli (IT)
(72) Inventor: VIGNOLA, Francesco, 13100 Vercelli (IT); VIGNOLA, Marcello, 13100 Vercelli (IT)
(74) Representative: Lissandrini, Marco
(86) International application number: PCT/IB2016/051057
(87) International publication number: WO 2016/135683

(56) References cited:
- US-A- 4 233 327
- US-A1- 2004 081 577
- K. R. BHATTACHARYA: "Process for Accelerated Aging of Rice", CEREAL FOODS WORLD, vol. 58, no. 1, 1 January 2013 (2013-01-01), pages 19-22, XP055220438, US ISSN: 0146-6283, DOI: 10.1094/CFW-58-1-0019
- GUJRAL H S ET AL: "Effect of accelerated aging on the physicochemical and textural properties of brown and milled rice", JOURNAL OF FOOD ENGINEERING, BARKING, ESSEX, GB, vol. 59, no. 2-3, 1 September 2003 (2003-09-01), pages 117-121, XP027458884, ISSN: 0260-8774, DOI: 10.1016/S0260-8774(02)00438-7 [retrieved on 2003-09-01]
- Q T Le ET AL: "Head rice yield, pasting property and correlations of accelerated paddy rice aging properties by microwave heating conditions", International Food Research Journal, vol. 21, no. 2 1 January 2014 (2014-01-01), pages 703-712, XP055220249, Retrieved from the Internet: URL:http://www.ifrj.upm.edu.my/21 (02) 2014/38 IFRJ 21 (02) 2014 Sirichai 372.pdf
- JAISUT D ET AL: "Accelerated aging of jasmine brown rice by high-temperature fluidization technique", FOOD RESEARCH INTERNATIONAL, ELSEVIER APPLIED SCIENCE, BARKING, GB, vol. 42, no. 5-6, 1 June 2009 (2009-06-01) , pages 674-681, XP026090876, ISSN: 0963-9969, DOI: 10.1016/J.FOODRES.2009.02.011 [retrieved on 2009-02-11]
- KALPANA RAYAGURU ET AL: "OPTIMIZATION OF PROCESS VARIABLES FOR ACCELERATED AGING OF BASMATI RICE", JOURNAL OF FOOD QUALITY., vol. 34, no. 1, 1 February 2011 (2011-02-01), pages 56-63, XP055220466, US ISSN: 0146-9428, DOI: 10.1111/j.1745-4557.2010.00366.x

## Description

### Technical field

This invention relates to a method for the accelerated aging of rice, in particular starting from paddy rice.

### Background art

The term paddy rice refers to rough rice resulting from the threshing and drying, still wrapped in husk.

It is known that paddy rice just harvested is poor in terms of quality and process characteristics relative to aged rice. Newly harvested rice cooks with a soft or sticky consistency, loses more solid materials in the cooking water when cooked and is less digestible compared with aged rice. The cooking and process characteristics improve during storage and the aging requires on average 4-6 months.

More specifically, during storage there are changes to both the chemical-physical properties of the rice, for example the processing yield, and the cooking properties, for example the consistency, expansion in volume and absorption of water. These changes are due to modifications in the lipids, proteins and other substances which are produced by the enzymatic activities and they are significant for the first two-four months after harvesting and they then stabilize.

In some industrial processes, the use of rice aged up to ten months may also be requested.

The lengthy aging times have a negative effect on the cost of the end product and on the times for managing the rough rice from the harvesting to the production.

A method for aging rice is known from patent US 3,258,342 and comprises processing refined rice obtained from the rough rice newly harvested and heating it for a period of from 2 to 8 hours in a closed container at a temperature of between 90°C and 110°C, without loss of moisture. The container and the contents are then cooled and held at ambient temperature for several hours in order to balance themselves. Whilst the results obtained were satisfactory in terms of quality, with regard to appearance, colouring of the grain, consistency and stickiness, they are not applicable to an industrial production comprising the use of a container for heating/cooling the grains.

K. R. BHATTACHARYA: "Process for Accelerated Aging of Rice",CEREAL FOODS WORLD, vol. 58, no. 1, 1 January 2013 (2013-01 -01), pages 19-22 discloses a process for accelerated rice ageing, by dry heating the selected paddies to 85-95°C, hot storage at 90°C for 1-3 hours and rapid cooling. GUJRAL H S ET AL: "Effect of accelerated aging on the physicochemical and textural properties of brown and milled rice",JOURNAL OF FOOD ENGINEERING, BARKING, ESSEX, GB, vol. 59, no. 2-3, 1 September 2003 (2003-09-01), pages 117-121 describes also a process for accelerated ageing of brown and milled rice, by humidifying the selected paddy to 14%, 18% and 22% moisture content, steaming for 30 minutes in an autoclave and allowing to dry in shade to 9-11% moisture content.

Q T Le ET AL: "Head rice yield, pasting property and correlations of accelerated paddy rice aging properties by microwave heating conditions",International Food Research Journal,vol. 21, no. 2 1 January 2014 (2014-01 -01), pages 703-712 discloses a process for accelerated ageing of paddy rice by microwave heating: sun-dried (less than 4% moisture) freshly harvested paddy rice is microwave treated, with two levels of microwave power output (1 kW and 2kW) for three levels of exposure time (23, 31 and 41 seconds) and three rounds of heating (1, 2 and 3 rounds).

JAISUT D ET AL: "Accelerated aging of jasmine brown rice by high-temperature fluidisation technique",FOOD RESEARCH INTERNATIONAL, ELSEVIER APPLIED SCIENCE, BARKING, GB, vol. 42, no. 5-6, 1 June 2009 (2009-06-01), pages 674-681 discloses another method for accelerated ageing of jasmine brown rice, comprising initial paddy humidification to 33% moisture content and fluidized bed drying at temperatures of 130-150°C. The moisture after fluidized bed drying was 23%, the rice was tempered for 30-120 minutes to reduce the stresses created during drying and then ventilated using ambient air until reaching the final moisture content of 16%.

US 2004/081577 A1 discloses a method for treating comestible materials such as rice grains for dis-infestation, enzyme denaturation and microorganism control, by heating the material with infrared energy; the method can be used also for accelerating the ageing process of rice by exposure to temperatures up to about 93°C, preferably 60-77°C. Subsequent attempts to use electromagnetic waves have also not produced the desired results, obtaining a discolouring of the grains similar to that of parboiled rice.

### Disclosure of the invention

In this context, the technical purpose which forms the basis of this invention is to propose a method for the accelerated aging of rice which overcomes the above-mentioned drawbacks of the prior art.

More specifically, the aim of this invention is to provide a method for the accelerated aging of rice which is capable of obtaining aged grains presenting a natural appearance and improved in terms of industrial yield, cooking properties and final cost.

The technical purpose indicated and the aims specified are substantially achieved by a method for the accelerated aging of rice comprising the technical features described in one or more of the appended claims. The dependent claims, also in combinations not expressly indicated, correspond to different embodiments of the invention.

More specifically, the method for the accelerated aging of rice according to this invention achieves the preset aims by means of a partial gelatinization of only the outer part of the grain, in order to reproduce the conditions of the aged paddy, obtaining the strengthening of the walls of the cells without the gelatinization of the starch.

### Detailed description of preferred embodiments of the invention

Further features and advantages of the invention are more apparent in the non-limiting description which follows of a preferred non-exclusive embodiment of a method for the accelerated aging of rice.

At the time of harvesting it is preferable to use "green" paddy rice, not dried, for which the method for the accelerated aging of rice according to this invention may comprise preferably a preliminary step a') of preparing the "green" paddy rice, not dried, to be subjected to the subsequent steps of the method.

According to a preferred embodiment, the method for the accelerated aging of rice comprises a step a) for selecting and dividing the paddies into uniform batches as a function of one or more of the following parameters: moisture, processing yield, amylose content and gelatinization temperature.

More specifically, the varieties of paddy rice are analysed accurately, measuring the following parameters: moisture content, processing yield, amylose content and gelatinization temperature. The paddy is then placed in silos in uniform batches after selection using apparatuses such as: threshers, cleaning machines, destoners, densitometers.

Subsequently, the method according to this invention comprises a step b) for humidifying a paddy batch so that the grain reaches a moisture content of 15-25%, preferably 18-20%. In step b), the paddy is wetted with hot water at the temperature of 40-70°C, preferably 55-65°C. The humidification step b) may be performed in a large diameter, slow moving Archimedean screw or in an apparatus provided with a section with vibrating plate for improving the dispersion of the water, and with a second section with rotating container for the tempering.

After the humidification step b), there may be a step b') of draining and drying, for example performed by unloading the moistened paddy onto a vibrating conveyor with perforated plate, with introduction of hot air, to eliminate the moisture left on the surface of the grains.

After the draining and drying step b'), there may be an intermediate stabilising step c') in insulating and preheated environments for a duration of approximately 30 minutes-24 hours, preferably of 45 minutes-2 hours, so as to obtain a controlled concentration of the moisture located on the desired outer layers of the grain. For the insulating environments it is possible to use silos equipped with insulating walls and preheated with hot air before introduction of the hot paddy to prevent undesired condensation phenomena.

After the humidification step b) and, if necessary, the draining and drying step b') and the intermediate stabilising step c'), there is a step c) for heating the paddy batch by applying a treatment using microwaves so that the grain reaches a temperature of 50-70°C, preferably of 55-63°C, without significant moisture loss. The frequencies, included between 300 MHz and 300 GHz, are, according to the ISM regulation 2.45 GHz.

More specifically, the microwave treatment may be performed with reverberant room with microwaves, comprising from two to eight emitters, preferably from four to six emitters, with power of 10 kW each.

Overall, the duration of the microwave treatment is approximately 1 minute and 45 seconds - 4 minutes, preferably approximately 2 minutes.

As part of the heating step c) it is possible to include some sub-steps including a sub-step for measuring the temperature of the paddy during the processing step using microwaves and a further sub-step for adjusting the power of the emitters and the conveying speed of the paddy on the basis of the temperature measured. The temperature may be measured using a thermal probe for example a Ti20 Fluke thermal camera, with temperature indication resolution of 0.1 °C.

The apparatus used may be the one described in patent application MI2009A001823 in the name of Emitech Srl. The infeed and outfeed are insulated with electromagnetic filters, so as to avoid the escape of electromagnetic waves.

Ater the processing with microwaves, there is a gelatinizing-pre-drying step d) in a closed environment and at a temperature of approximately 2-4°C higher than the gelatinization temperature of the variety processed, while keeping the temperature, moisture and ventilation controlled so as to cause a controlled and partial gelatinization of the grain, limited only to the outer layer,

The gelatinizing-pre-drying step d) occurs continuously for example in a three-level dryer with a mesh roller table.

The conditions of execution of the gelatinizing-pre-drying step d) allow the gelatinization to stop when the paddy cools down due to the evaporation of the surface moisture.

After the gelatinizing-pre-drying step d) there is a step e) or drying with ventilation and with air temperature of the air of 30-and a step f) for resting or tempering without ventilation with temperature of the air of 30-35°C.

Preferably, the drying e) and resting or tempering f) steps are performed in a recirculating dryer wherein the drying step e) is performed in a first column for a length of time of approximately 8 hours and the resting or tempering step f) is performed in a subsequent column for a length of time of 6-10 hours, preferably 5-8 hours, so that the moisture is transferred from the moister heart of the grain towards the dryer exterior and is balanced.

The resting or tempering occurs hot, without cooling. The paddy which is still hot is cooled by a step g) for rapid cooling with air in forced closed circuit only after the resting or tempering step. The rapid cooling step g) may be performed in a progressive chiller with one passage, through a metal mesh conveyor of stainless steel, with air in forced closed circuit supplied, for example, from the cold water produced by a chiller.

The method according to this invention makes it possible to prevent tensions and cracks inside the grains, respecting the grain structure, with consequent excellent yield when refining. A substantially natural colour and an accelerated aging of the paddy is also obtained, with the improvement of the cooking quality of the rice.

The yield of the processing is at least equal to that of paddy aged naturally and in many cases better. More specifically, the product obtained has strength and consistency characteristics which can be estimated to be equal to those of a paddy aged for eight-ten months.

The humidification step facilitates the uniformity of the treatment with microwaves, allowing the use of relatively low temperatures and preparing the surface of the grains for the subsequent treatment by hot air.

The process data: water steeping temperature, microwaves treatment time and grain temperature, duration and temperature of gelatinization-pre-drying step are correlated with the variety of the paddy processed, its amylose content and its gelatinization temperature.

## Claims

1. A method for the accelerated aging of rice, comprising the steps of:
a) selecting and dividing the paddies into uniform batches as a function of one or more of the following parameters: moisture, processing yield, amylose content and gelatinization temperature,
b) humidifying a paddy batch so that the grain reaches a moisture content of 15-25%, preferably 18-20%,
c) heating the paddy batch by applying a treatment using microwaves so that the grain reaches a temperature of 50-70°C, preferably of 55-63°C, without significant moisture loss,
d) gelatinizing-pre-drying in closed environment and at a temperature of approximately 2-4°C higher than the gelatinization temperature of the variety processed, while keeping the temperature, moisture and ventilation controlled so as to cause a controlled and partial gelatinization of the grain, limited only to the outer layer,
e) drying with ventilation and with air temperature of the air of 30-35°,
f) resting or tempering without ventilation with temperature of the air of 30-35°C,
g) rapid cooling with air in forced closed circuit.

2. The method for the accelerated aging of rice according to claim 1, comprising a preliminary step a') of preparing "immature", undried paddy, to be subjected to steps a)-g).

3. The method for the accelerated aging of rice according to claim 1, wherein in the humidification step b), the paddy is wetted with hot water at the temperature of 40-70°C, preferably 55-65°C.

4. The method for the accelerated aging of rice according to claim 3, wherein the humidification step b) is performed in a large diameter, slow moving Archimedean screw or in an apparatus provided with a section with vibrating plate for improving the dispersion of the water, and with a second section with rotating container for the tempering.

5. The method for the accelerated aging of rice according to any one of the preceding claims, comprising, after the humidification step b), a step b') of draining and drying, for example performed by unloading the moistened paddy onto a vibrating conveyor with perforated plate, with introduction of hot air, to eliminate the moisture left on the surface of the grains.

6. The method for the accelerated aging of rice according to any one of the preceding claims, comprising, before the heating step c), an intermediate stabilising step c') in insulating and preheated environments for a duration of approximately 30 minutes-24 hours, preferably of 45 minutes-2 hours, so as to obtain a controlled concentration of the moisture located on the desired outer layers.

7. The method for the accelerated aging of rice according to claim 5 and claim 6, wherein the draining and drying step b') precedes the intermediate stabilising step c').

8. The method for the accelerated aging of rice according to any one of the preceding claims, wherein the microwave treatment is performed with reverberant room with microwaves, comprising from two to eight emitters, preferably from four to six emitters, with power of 10 kW each.

9. The method for the accelerated aging of rice according to claim 8, wherein the duration of the microwave treatment is approximately 1 minute and 45 seconds-4 minutes, preferably approximately 2 minutes.

10. The method for the accelerated aging of rice according to claim 8 or 9, wherein the heating step c) comprises the sub-steps of:
- detecting the temperature of the paddy during the treatment step using microwaves and
- adjusting the power of the emitters and the conveying speed of the paddy on the basis of the temperature detected.

11. The method for the accelerated aging of rice according to any one of the preceding claims, wherein the gelatinizing-pre-drying step d) occurs continuously for example in a three-level dryer with a mesh roller table.

12. The method for the accelerated aging of rice according to any one of the preceding claims, wherein the drying e) and resting or tempering f) steps are performed in a recirculating dryer wherein the drying step e) is performed in a first column for a length of time of approximately 8 hours and the resting or tempering step f) is performed in a subsequent column for a length of time of 6-10 hours, preferably 5-8 hours, so that the moisture is transferred from the moister heart of the grain towards the dryer exterior and is balanced.

13. The method for the accelerated aging of rice according to any one of the preceding claims, wherein the rapid cooling step g) is performed in a progressive chiller with one passage, through a metal mesh conveyor, with air in forced closed circuit.

## Patentansprüche

1. Verfahren zur beschleunigten Alterung von Reis, umfassend die folgenden Schritte:
a) Auswählen und Unterteilen des Rohreises in einheitliche Partien als eine Funktion von einem oder mehreren der folgenden Parameter: Feuchtigkeit, Verarbeitungsertrag, Amylasegehalt und Verkleisterungstemperatur;
b) Befeuchten einer Rohreis-Partie, sodass das Korn einen Feuchtigkeitsgehalt von 15 bis 25 %, vorzugsweise von 18 bis 20 %, erreicht;
c) Erhitzen der Rohreis-Partie mittels Anwendung einer Behandlung unter Nutzung von Mikrowellen, sodass das Korn eine Temperatur von 50 bis 70 °C, vorzugsweise von 55 bis 63 °C, ohne erheblichen Feuchtigkeitsverlust erreicht;
d) Verkleistern/Vortrocknen in einer geschlossenen Umgebung und bei einer Temperatur, die um ungefähr 2 bis 4 °C höher ist als die Verkleisterungstemperatur der verarbeiteten Sorte, wobei Temperatur, Feuchtigkeit und Belüftung kontrolliert bleiben, um eine kontrollierte und teilweise Verkleisterung des Korns, begrenzt auf die Außenschicht, zu verursachen;
e) Trocken mit Belüftung und bei einer Lufttemperatur von 30 bis 35 °;
f) Lagern oder Wärmebehandeln ohne Belüftung bei einer Lufttemperatur von 30 bis 35 °C;
g) rasches Abkühlen mit Luft in einem geschlossenen Zwangskreislauf.

2. Verfahren zur beschleunigten Alterung von Reis nach Anspruch 1, umfassend einen einleitenden Schritt a') zum Vorbereiten von "unreifem", nicht getrocknetem Rohreis, der den Schritten a) bis g) zu unterziehen ist.

3. Verfahren zur beschleunigten Alterung von Reis nach Anspruch 1, wobei der Reis beim Schritt b) zum Befeuchten mit heißem Wasser bei einer Temperatur von 40 bis 70 °C, vorzugsweise von 55 bis 65 °C, befeuchtet wird.

4. Verfahren zur beschleunigten Alterung von Reis nach Anspruch 3, wobei der Schritt b) zum Befeuchten in einer sich langsam bewegenden archimedischen Schraube mit großem Durchmesser oder einem Gerät durchgeführt wird, das mit einer Abschnitt mit einer Rüttelplatte ausgestattet ist, um die Verteilung des Wassers zu optimieren, und mit einer zweiten Abschnitt mit einem rotierenden Behälter für die Wärmebehandlung.

5. Verfahren zur beschleunigten Alterung von Reis nach einem der vorhergehenden Ansprüche, umfassend nach dem Schritt b) zum Befeuchten einen Schritt b') zum Entwässern und Trocken, beispielsweise durchgeführt, indem der befeuchtete Rohreis auf einen Rüttelförderer mit einer Lochplatte mit Einführung von Heißluft geladen wird, um die auf der Oberfläche der Reiskörner verbliebene Feuchtigkeit zu beseitigen.

6. Verfahren zur beschleunigten Alterung von Reis nach einem der vorhergehenden Ansprüche, umfassend vor dem Schritt c) zum Erwärmen einen stabilisierenden Zwischenschritt c') in isolierenden und vorgeheizten Umgebungen für eine Dauer von zirka 30 Minuten bis 24 Stunden, vorzugsweise 45 Minuten bis 2 Stunden, sodass eine kontrollierte Konzentration der auf den gewünschten äußeren Schichten befindlichen Feuchtigkeit erhalten wird.

7. Verfahren zur beschleunigten Alterung von Reis nach Anspruch 5 und Anspruch 6, wobei der Schritt b') zum Entwässern und Trocknen vor dem stabilisierenden Zwischenschritt c') stattfindet.

8. Verfahren zur beschleunigten Alterung von Reis nach einem der vorhergehenden Ansprüche, wobei die Mikrowellenbehandlung mit einem Hallraum mit Mikrowellen durchgeführt wird, umfassend zwei bis acht Strahler, vorzugsweise vier bis sechs Strahler, mit einer Leistung von je 10 kW.

9. Verfahren zur beschleunigten Alterung von Reis nach Anspruch 8, wobei die Dauer der Mikrowellenbehandlung ungefähr 1 Minute und 45 Sekunden bis 4 Minuten beträgt, vorzugsweise ungefähr 2 Minuten.

10. Verfahren zur beschleunigten Alterung von Reis nach Anspruch 8 oder 9,
wobei der Schritt c) zum Erwärmen die folgenden Unterschritte umfasst:
- Erfassen der Temperatur des Rohreises während des Behandlungsschritts unter Nutzung von Mikrowellen und
- Einstellen der Leistung der Strahler und der Fördergeschwindigkeit des Rohreises auf der Grundlage der erfassten Temperatur.

11. Verfahren zur beschleunigten Alterung von Reis nach einem der vorhergehenden Ansprüche, wobei der Schritt d) zum Verkleistern/Vortrocknen kontinuierlich stattfindet, zum Beispiel in einem dreistufigen Trockner mit Netzrollentisch.

12. Verfahren zur beschleunigten Alterung von Reis nach einem der vorhergehenden Ansprüche, wobei die Schritte e) zum Trocknen und f) zum Lagern oder Wärmebehandeln in einem Umlauftrockner durchgeführt werden, wobei der Schritt e) zum Trocknen in einer ersten Säule für eine Dauer von ungefähr 8 Stunden durchgeführt wird und der Schritt f) zum Lagern oder Wärmebehandeln in einer nachfolgenden Säule für eine Dauer von 6 bis 10 Stunden, vorzugsweise 5 bis 8 Stunden, durchgeführt wird, sodass die Feuchtigkeit vom Feuchtigkeitskern des Korns zur Außenseite des Trockners übertragen und ausgewogen wird.

13. Verfahren zur beschleunigten Alterung von Reis nach einem der vorhergehenden Ansprüche, wobei der Schritt g) zum schnellen Abkühlen in einer progressiven Kälteanlage mit einem Durchgang durch einen Metallmaschenförderer mit Luft in einem geschlossenen Zwangskreislauf durchgeführt wird.

## Revendications

1. Procédé pour le vieillissement accéléré du riz, comprenant les étapes de :
a) sélectionner et diviser les paddys en des lots uniformes en fonction d'un ou plusieurs des paramètres suivants : teneur en eau, rendement de transformation, teneur en amylase et température de gélatinisation,
b) humidifier un lot de paddys de manière à ce que le grain atteigne une teneur en eau de 15-25 %, de préférence 18-20 %,
c) chauffer le lot de paddys en appliquant un traitement utilisant des microondes de manière à ce que le grain atteigne une température de 50-70 °C, de préférence de 55-63 °C, sans perte significative de teneur en eau,
d) gélatinisation-préséchage dans un environnement clos et à une température approximativement supérieure de 2-4 °C que celle de la gélatinisation de la variété traitée, tout en gardant le contrôle de la température, de la teneur en eau et de la ventilation de manière à provoquer une gélatinisation contrôlée et partielle du grain limitée uniquement à la couche extérieure,
e) sécher par ventilation et avec une température de l'air de 30-35 °,
f) laisser au repos ou tempérage sans ventilation avec une température de l'air de 30-35 °C,
g) refroidir rapidement avec de l'air dans un circuit fermé à circulation forcée.

2. Procédé pour le vieillissement accéléré du riz selon la revendication 1, comprenant une étape préliminaire a') consistant à préparer un paddy non séché « immature » à soumettre aux étapes a)-g).

3. Procédé pour le vieillissement accéléré du riz selon la revendication 1, dans lequel dans l'étape b) d'humidification, le paddy est humidifié avec de l'eau chaude à une température de 40-70 °C, de préférence 55-65 °C.

4. Procédé pour le vieillissement accéléré du riz selon la revendication 3, dans lequel l'étape b) d'humidification est réalisée dans une vis d'Archimède lente à grand diamètre à ou dans un appareil pourvu d'une section ayant une plaque vibrante pour améliorer la dispersion de l'eau, et avec une seconde section dotée d'un récipient rotatif pour le tempérage.

5. Procédé pour le vieillissement accéléré du riz selon l'une quelconque des revendications précédentes, comprenant, après l'étape b) d'humidification, une étape b') d'évacuation et de séchage, par exemple en déchargeant le paddy humidifié sur un transporteur vibrant doté d'une plaque perforée, avec introduction d'air chaud pour éliminer l'humidité restée à la surface des grains.

6. Procédé pour le vieillissement accéléré du riz selon l'une quelconque des revendications précédentes, comprenant, avant l'étape c) de chauffage, une étape c') de stabilisation intermédiaire dans des milieux isolés et préchauffés pendant une durée approximative comprise entre 30 minutes-24 heures, de préférence de 45 minutes-2 heures, de manière à obtenir une concentration contrôlée de la teneur en eau située sur les couches extérieures désirées.

7. Procédé pour le vieillissement accéléré du riz selon la revendication 5 et 6, dans lequel l'étape b') d'évacuation et de séchage précède l'étape c') de stabilisation intermédiaire.

8. Procédé pour le vieillissement accéléré du riz selon l'une quelconque des revendications précédentes, dans lequel le traitement par microondes est réalisé avec une chambre réverbérante avec microondes, comprenant de deux à huit émetteurs, de préférence de quatre à six émetteurs ayant chacun une puissance de 10 kW.

9. Procédé pour le vieillissement accéléré du riz selon la revendication 8, dans lequel la durée du traitement par microondes est comprise entre environ 1 minute et 45 secondes-4 minutes, est de préférence d'environ 2 minutes.

10. Procédé pour le vieillissement accéléré du riz selon la revendication 8 ou 9,
dans lequel l'étape c) de chauffage comprend les sous-étapes de :
- détecter la température du paddy durant l'étape de traitement utilisant des microondes et
- régler la puissance des émetteurs et la vitesse de transport du paddy sur la base de la température détectée.

11. Procédé pour le vieillissement accéléré du riz selon l'une quelconque des revendications précédentes, dans lequel l'étape d) de gélatinisation-préséchage se déroule en permanence par exemple dans un séchoir à trois niveaux doté d'une table à rouleaux à grille.

12. Procédé pour le vieillissement accéléré du riz selon l'une quelconque des revendications précédentes, dans lequel les étapes e) de séchage et f) de mise au repos ou tempérage sont réalisées dans un séchoir à recirculation dans lequel l'étape e) de séchage est réalisée dans une première colonne pendant une durée d'environ 8 heures et l'étape f) de mise au repos ou de tempérage est réalisée dans une colonne ultérieure pendant une durée de 6-10 heures, de préférence 5-8 heures, de sorte que la teneur en eau soit transférée du coeur du grain humidifié vers l'extérieur du séchoir et soit équilibrée.

13. Procédé pour le vieillissement accéléré du riz selon l'une quelconque des revendications précédentes, dans lequel l'étape g) de refroidissement rapide est réalisée dans un refroidisseur progressif avec un passage à travers un transporteur à maille métallique avec de l'air dans un circuit fermé à circulation forcée.
